# EUROPÄISCHE PATENTSCHRIFT

(11) **EP 2 196 790 B1**
(45) Veröffentlichungstag und Bekanntmachung des Hinweises auf die Patenterteilung: **21.09.2016**
(21) Anmeldenummer: 10000443.1
(22) Anmeldetag: 29.11.2003
(51) Int. Cl.: G01M 17/007, G01M 9/06

(54) **Vorrichtung zur Prüfung von Luftgeräuschen eines Kraftfahrzeugs**
Procedure and device for testing the air noise of a motor vehicle
Procédé et dispositif de test des bruits d'air d'un véhicule à moteur

(30) Priorität: 20.02.2003 DE 10307182
(43) Veröffentlichungstag der Anmeldung: 16.06.2010
(62) Teilanmeldung aus: 03027540.8
(73) Patentinhaber: Dr. Ing. h.c. F. Porsche AG, 70435 Stuttgart (DE)
(72) Erfinder: Ochwat, Michael, 71706 Markgröningen (DE); Horst, Herbert, 70806 Kornwestheim (DE); Möller, Mario, 70191 Stuttgart (DE); Mosel, Timo, 70734 Fellbach (DE); Ehinger, Martin, 76187 Karlsruhe (DE)

(56) Entgegenhaltungen:
- EP-A- 0 016 656
- DE-A1- 3 939 099
- DE-C1- 3 715 016

## Beschreibung

Die Erfindung bezieht sich auf eine Vorrichtung zur Prüfung von Luftgeräuschen eines Kraftfahrzeugs nach dem Oberbegriff des Patentanspruchs 1.

Bei einem in Betrieb befindlichen Personenkraftwagen entstehen Luftgeräusche, und zwar durch Umströmung einer Außenhaut eines Aufbaus auf zweierlei Art: Erstens durch eine turbulente Grenzschicht bei an der Außenhaut anliegender Strömung und zweitens durch stationäre und instationäre Ablösung und Wiederanlegen der Strömung von der bzw. an der Außenhaut. Infolge der turbulenten Grenzschicht wirkt auf die Oberfläche der Außenhaut ein Strömungswechseldruck, der sowohl Luftschall (Schallwellen breiten sich in dem gasförmigen Medium Luft aus) wie auch Körperschall (Schallwellen breiten sich in einem festen Körper aus) erzeugt.

Es ist ein Windkanal bekannt DE 41 39 359 Al bekannt, der mit einer Freistrahlmessstrecke und einer zur Erzeugung einer in ihrer Richtung veränderlichen Strömung bei laufendem Windkanal schwenkbaren Windkanaldüse versehen ist. Dieser Windkanal kann zusätzlich mit akustisch wirksamen Einrichtungen ausgestattet werden, die in die Strömungsführung integriert sind. Dies deshalb, um den Schalldruckpegel so weit zu senken, dass auch die Wahrnehmung und messtechnische Erfassung der von der Anströmrichtung abhängigen Strömungsgeräusche möglich ist.

Die DE 39 39 099 A1 befasst sich mit einer Prüfvorrichtung für Front-Kühlerteile eines Kraftfahrzeugs, die mit unterschiedlichen Luftdurchsätzen durchströmbar sind. Dabei ist einem Kühler des Kraftfahrzeugs ein Trichter vorgelagert, dessen Querschnitt sich zum Kühler hin erweitert und mit einer Austrittsöffnung annähernd bündig mit einer Umrisslinie einer Kühlluft-Eintrittsöffnung verläuft. Außerdem umfasst die Prüfvorrichtung ein steuerbares Gebläse, das in der Nähe einer Eintrittsöffnung des Trichters vorgesehen ist.

Ferner beschreibt die DE 37 15016 C1 einen Geraüsch - prüfstand für kraftfahrzeuge mit einem Gebläse zur Erzeugung eines Luftstrahls, mit dem das Fahrzeug anblasbar ist. Die Düse ist dabei an Kettenaufgehängt.

Aufgabe der Erfindung ist es, eine Vorrichtung zur Prüfung von Luftgeräuschen eines Kraftfahrzeuges, insbesondere eines Personenkraftwagens zu entwickeln, durch die die qualitative Beurteilung des Personenkraftwagens hinsichtlich von Insassen wahrnehmbarer Luftgeräusche weiter optimiert wird. Dabei sollten sich die Vorrichtung durch Einfachheit und leichte Umsetzbarkeit auszeichnen.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass mit der Vorrichtung bei stehendem Personenkraftwagen durch Aufbringung gezielter Luftströmungen an definierte Bereiche der Außenhaut auf einfache Weise die Luftgeräusche subjektiv und/oder objektiv feststellbar sind. Dadurch entfallen aufwendige Prüffahrten mit dem Personenkraftwagen auf Teststrecken oder öffentlichen Strassen, und eventuelle Nachprüfungen. Wenn ferner an einem Personenkraftwagen Überarbeitungen erforderlich sind, sind diese in Verbindung mit dem Verfahren leichter durchzuführen. Die Luftströmungen werden durch ein Gebläse auf die Außenhaut aufgebracht, wobei definierte Messpunkte bspw. einer Tür des Aufbaus durch das Gebläse beaufschlagt werden. Hierfür eignet sich eine Strömungsvorrichtung, die das einen Ausströmquerschnitt umfassende Gebläse und eine zur Beaufschlagung der Messpunkte dienende Blasdüse aufweist. Dem Gebläse ist vorzugsweise ein Schalldämpfer nachgeschaltet und zwischen Blasdüse und Schalldämpfer ist ein Förderschlauch vorgesehen. Schließlich besteht die Möglichkeit Gebläse, Schalldämpfer, Förderschlauch und Blasdüse zu einer Baueinheit zusammenzufassen.

In der Zeichnung wird ein Ausführungsbeispiel der Erfindung gezeigt, das nachstehend näher beschrieben wird.

Es zeigen:

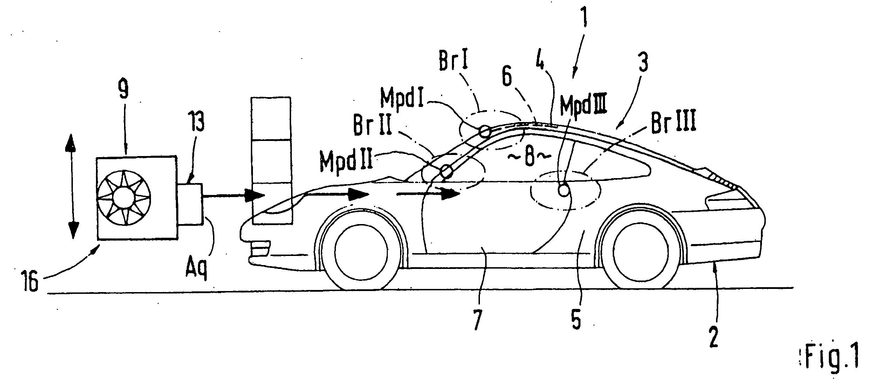

- Fig. 1: eine Seitenansicht eines stehenden Personenkraftwagens, an dem die erfindungsgemäße Vorrichtung angewandt wird,
- Fig. 2.: eine Schrägansicht von hinten links auf den Personenkraftwagen mit einer Blasdüse,
- Fig. 3: eine weitere Schrägansicht ähnlich der Fig. 2,

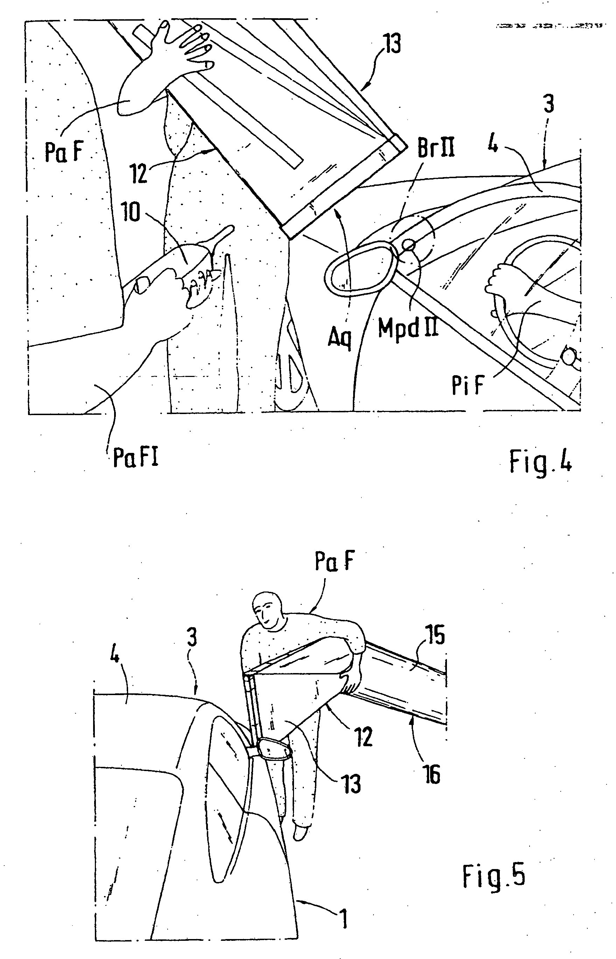

- Fig. 4: eine Schrägansicht von hinten links auf eine Windschutzsäule des Personenkraftwagens mit einer Blasdüse und Prüfpersonen zur objektiven und subjektiven Durchführung von Meßmethoden für Luftgeräusche,
- Fig. 5: eine Schrägansicht von hinten rechts auf den Personenkraftwagen mit der Blasdüse,
- Fig. 6: eine Schrägansicht von vorne auf den Personenkraftwagen mit der Blasdüse,
- Fig. 7: eine Schrägansicht von rechts auf den Bug und die Windschutzscheibe des Personenkraftwagens mit der Blasdüse,
- Fig. 8: eine schematische Darstellung der erfindungsgemäßen Vorrichtung

- Fig. 9: eine Ansicht in Pfeilrichtung A der Fig. 8 mit verschiedenen Ausführungsformen von Austrittsquerschnitten der Blasdüse.

Ein Personenkraftwagen 1 weist einen Aufbau 2 mit einer Außenhaut 3 auf, die im Fahrbetrieb des besagten Personenkraftwagen von Luft angeströmt wird, wodurch Luftgeräusche entstehen, die über Dichtungen zwischen feststehenden Aufbaustrukturen wie bspw. ein Dach 4 und eine Seitenwand 5 und beweglichen Aufbauelementen wie bspw. ein Schiebedach 6 und eine Tür 7 als Körperschall und Luftschall in einen Fahrgastraum 8 gelangen. Luftgeräusche dieser Art werden bei entsprechender Ausprägung vor allem von im Fahrgastraum 8 sitzenden Insassen Is als störend und damit als qualitätsbeeinträchtigend wahrgenommen. Zur Überprüfung der Luftgeräusche wird folgendes Verfahren angewandt:

An dem unbewegten Personenkraftwagen 1 werden in Bereichen bspw. BrI, BrII und BrIII der Außenhaut 3, wo die Dichtungen zwischen den feststehenden Aufbaustrukturen - Dach 4, Seitenwand 5 - und beweglichen Aufbauelementen - Schiebedach 6, Tür 7 - verlaufen, gezielte Luftströmungen aufgebracht und die durch die Luftströmungen verursachten Luftgeräusche werden subjektiv von Prüfpersonen PiF und PaF innerhalb des Fahrgastraums 8 bzw. außerhalb des Personenkraftwagens 1 wahrgenommen und/oder objektiv gemessen.

Die Luftströmungen werden mittels eines außerhalb des Personenkraftwagens 1 vorgesehenen bzw. arbeitenden Gebläses 9 auf die Außenhaut 3 des Aufbaus 2 aufgebracht, und zwar an definierten Messpunkten MpdI, MpdII und MpIII der Tür 7 und des Schiebedachs 6. Die Messpunkte MpdI, MpdII und MpdIII können innerhalb der Bereiche BrI, BrII und BrIII liegen. Zur objektiven Messung der Luftgeräusche wird bei diesem Verfahren der Schalldruckpegel herangezogen, der mittels eines akustischen Nahfeldmessgerät 10 ermittelt wird.

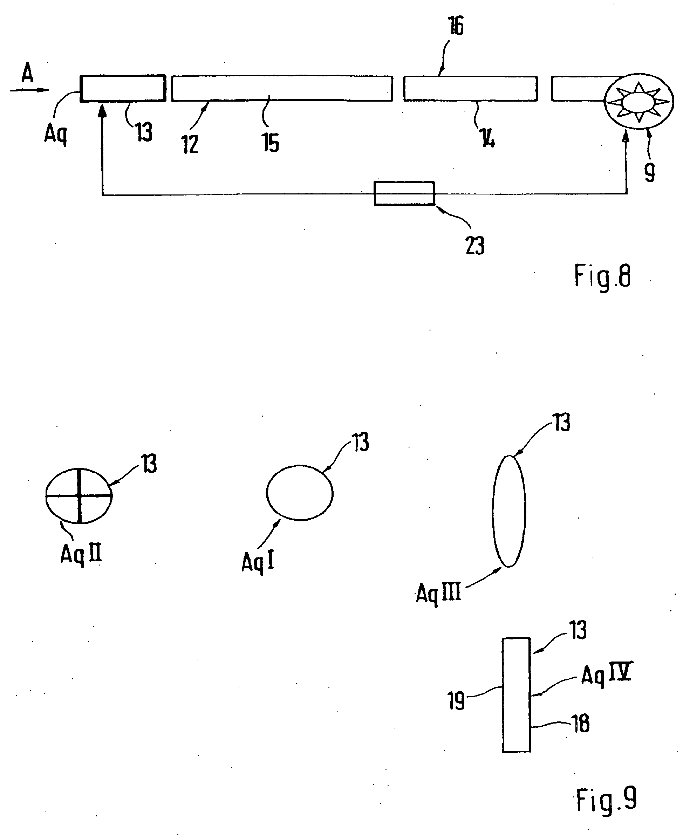

Für die Durchführung des vorstehend beschriebenen Verfahrens eignet sich eine Vorrichtung, die das einen Ausströmquerschnitt Aq aufweisende Gebläse 9 umfasst und als eine Strömungsvorrichtung 12 ausgebildet ist. Die Strömungsvorrichtung 12 ist mit einer Blasdüse 13 versehen, die zur Beaufschlagung der Bereiche BrI, BrII und BrIII bzw. der Messpunkte MpI, MPII und MpIII dient. Dabei ist dem Gebläse 9 ein Schalldämpfer 14 nachgeschaltete, und zwischen Blasdüse 13 und Schalldämpfer 14 ist ein bspw. flexibler Förderschlauch 15 angeordnet - Fig. 8 -. Das Gebläse 9, die Blasdüse 13, der Schalldämpfer 14 und der Förderschlauch 15 sind zu einer Baueinheit 16 zusammengefasst, die Bestandteil einer kompletten Prüfstation zur Feststellung von Luftgeräuschen sein kann.

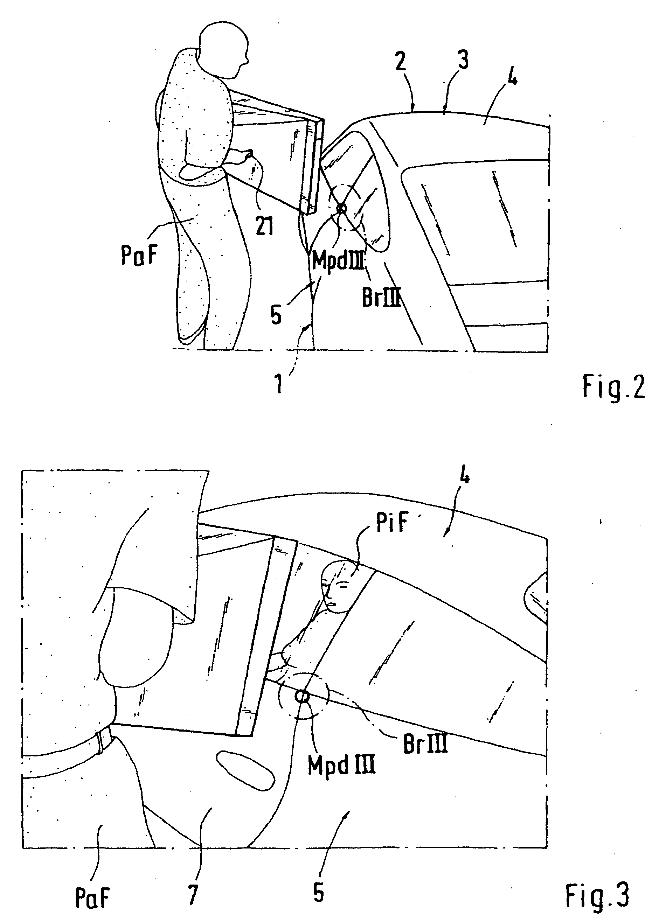

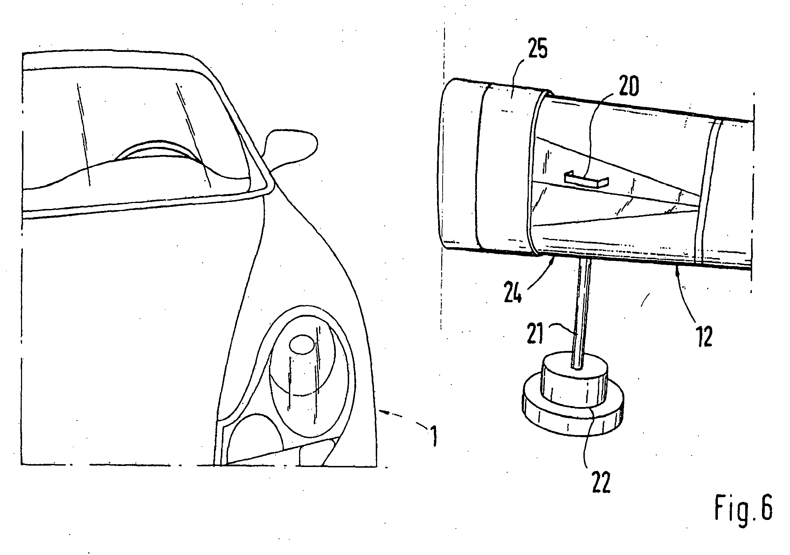

In Fig. 9 sind Austrittsquerschnitte AqI, AqII, AqII und AqIV der Blasdüse 13 dargestellt. Dabei weisen die Austrittsquerschnitt AqI und AqII Kreisform auf, wobei Austrittsquerschnitt AqII für eine definierte Verteilung der Luftströmung mit einem rasterförmigen Einsatz 17 versehen ist. Demgegenüber besitzen Austrittsquerschnitt AqIII Ovalform und Austrittsquerschnitt AqIV Rechteckform-mit parallelen langen Wänden 18 und 19, wobei eine optimierte Form des Austrittsquerschnitts Aq der Blasdüse 13 unter anderem empirisch festlegbar ist. Die Blasdüse 13 ist zur Hinführung auf die Messpunkte MpI, MpII und MpIII durch die Prüfperson PaF beweglich ausgeführt und mit einem Handgriff 20 versehen - Fig. 2 -, wobei die Prüfperson PiF im Fahrgastraum 8 die Wirkungen der Blasdüse 13 bzw. des Gebläses 9 bezüglich Luftgeräusche überprüft - Fig. 2 und 3 -. Eine weitere Prüfperson PaFI stellt gleichzeitig die Luftgeräusche an der Außenseite des Personenkraftwagens 1, und zwar fahrzeugnahe mit dem Nahfeldmessgerät 10 fest. Die Blasdüse 13 kann aber auch auf einer Stütze 21 angeordnet sein, die auf einem Sockel 22 ruht - Fig. 6 -; denkbar ist aber auch, dass die Blasdüse 13 an einem Seil oder einer Kette eines mobilen Flaschenzugs hängend angebracht ist, was jedoch nicht gezeigt wird. Die Luftströmung des Gebläses 9 bzw. ihre Geschwindigkeit ist vermittels einer Steuereinrichtung 23 regel- und an einem Anzeigegerät darstellbar - nicht näher ausgeführt -.

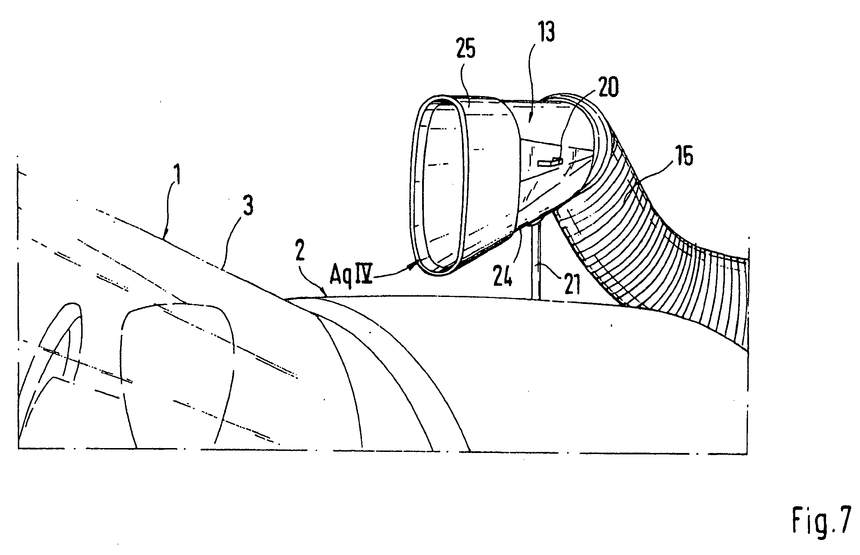

Schließlich ist die Blasdüse 13 an ihre Außenseite 24 mit einer Umhüllung 25 aus elastischem Werkstoff versehen, die zumindest mit geringem Abstand über den Austrittsquerschnitt Aq hinausragt - Fig. 7 - und bei einem unbeabsichtigten Auftreffen der Blasdüse 13 an der Außenhaut 3 bleibende Schäden an dem Personenkraftwagen 1 verhindert.

## Patentansprüche

1. Vorrichtung zur Prüfung von Luftgeräuschen eines Kraftfahrzeuges, insbesondere eines Personenkraftwagens (1), die durch Anströmen von Luft auf eine Außenhaut (3) eines Aufbaus des Personenkraftwagens (1) entstehen, mit einem Gebläse (9) mittels dem an dem unbewegten Personenkraftwagen (1) in Bereichen der Außenhaut (3) Luftströmungen aufbringbar sind, **dadurch gekennzeichnet, dass** die durch die Luftströmungen auftretenden Luftgeräusche subjektiv durch eine im Inneren des Personenkraftwagens (1) befindliche Prüfperson (PiF) und eine außerhalb des Personenkraftwagens (1) befindliche Prüfperson (PaF) wahrnehmbar und/oder durch Messung ermittelbar sind, wobei das Gebläse (9) durch die außerhalb des Personenkraftwagens (1) befindliche Prüfperson (PaF) beweglich ausgebildet ist, dergestalt, dass das Gebläse (9) zur Wahrnehmung und/oder Messung der Luftgeräusche auf definierte Messpunkte (MPI, MPII und MPIII) im Bereich der Türen (7) und des Schiebedachs (6) richtbar ist.

2. Vorrichtung nach Anspruch 1, **dadurch gekennzeichnet, dass** das einen Ausströmquerschnitt umfassende Gebläse (9) Bestandteil einer Strömungsvorrichtung (12) ist, die mit einer Blasdüse (13) zur Beaufschlagung der Messpunkte (MPI, MPII und MPIII) versehen ist.

3. Vorrichtung nach Anspruch 2, **dadurch gekennzeichnet, dass** dem Gebläse (9) ein Schalldämpfer (14) nachgeschaltet ist.

4. Vorrichtung nach Anspruch 3, **dadurch gekennzeichnet, dass** zwischen Blasdüse (13) und Schalldämpfer (14) ein Förderschlauch (15) vorgesehen ist.

5. Vorrichtung nach einem oder mehreren der vorangehenden Ansprüche, **dadurch gekennzeichnet, dass** Gebläse (9), Schalldämpfer (14), Förderschlauch (15) und Blasdüse (13) zumindest teilweise zu einer Baueinheit (16) zusammengefasst sind.

6. Vorrichtung nach einem oder mehreren der vorangehenden Ansprüche, **dadurch gekennzeichnet, dass** der Austrittsquerschnitt (AqI) der Blasdüse (13) Kreisform aufweist.

7. Vorrichtung nach Anspruch 6, **dadurch gekennzeichnet, dass** der Austrittsquerschnitt (AqII) mit einem rasterförmigen Einsatz (17) versehen ist.

8. Vorrichtung nach einem oder mehreren der vorangehenden Ansprüche, **dadurch gekennzeichnet, dass** der Austrittsquerschnitt AqIII und (AqIV) der Blasdüse (13) Rechteckform bspw. mit in etwa parallelen Wänden (18,19) oder Ovalform aufweist.

9. Vorrichtung nach einem oder mehreren der vorangehenden Ansprüche, **dadurch gekennzeichnet**, das die Blasdüse (13) beweglich ausgebildet und mit wenigstens einem Handgriff (20) versehen ist.

10. Vorrichtung nach einem oder mehreren der vorangehenden Ansprüche, **dadurch gekennzeichnet, dass** die Blasdüse (13) schwenkbeweglich auf einer Stütze (21) mit Sockel (22) gelagert ist.

11. Vorrichtung nach einem oder mehreren der vorangehenden Ansprüche, **dadurch gekennzeichnet, dass** eine Außenseite (24) der Blasdüse (13) im Bereich des Austrittsquerschnitts zumindest bereichsweise mit einer Umhüllung (25) bspw. aus nachgiebigem Werkstoff versehen ist.

12. Vorrichtung nach Anspruch 11, **dadurch gekennzeichnet, dass** die Umhüllung (25) zumindest mit geringem Umfang über den Austrittsquerschnitt (Aq; AqI, AqII, Aq III und Aq IV) hinausragt.

13. Vorrichtung nach Anspruch 6, **dadurch gekennzeichnet, dass** die Luftströmung des Gebläses (9) mittels eines Steuereinrichtung (23) regelbar ist.

## Claims

1. Device for testing the air noise of a motor vehicle, in particular of a passenger car (1), which is caused by air flowing against an outer skin (3) of a body of the passenger car (1), with a blower (9) by means of which air flows can be applied to the non-moving passenger car (1) in the regions of the outer skin (3), **characterized in that** the air noise which occurs as a result of the air flows can be perceived subjectively by a testing person (PiF) located in the interior of the passenger car (1) and a testing person (PaF) located outside the passenger car (1), and/or can be determined by measurement, wherein the blower (9) is designed so as to be moveable by the testing person (PaF) located outside the passenger car (1) in such a way that the blower (9) can be directed at defined measuring points (MPI, MPII and MPIII) in the region of the doors (7) and of the sun roof (6) in order to perceive and/or measure the air noise.

2. Device according to Claim 1, **characterized in that** the blower (9) which includes an outflow cross section is a component of a flow device (12) which is provided with a blower nozzle (13) for acting on the measuring points (MPI, MPII and MPIII).

3. Device according to Claim 2, **characterized in that** a sound absorber (14) is connected downstream of the blower (9).

4. Device according to Claim 3, **characterized in that** a feed hose (15) is provided between blower nozzle (13) and sound absorber (14).

5. Device according to one or more of the preceding claims, **characterized in that** the blower (9), the sound absorber (14), the feed hose (15) and the blower nozzle (13) are combined at least partially to form one structural unit (16).

6. Device according to one or more of the preceding claims, **characterized in that** the outlet cross section (AqI) of the blower nozzle (13) is circular in shape.

7. Device according to Claim 6, **characterized in that** the outlet cross section (AqII) is provided with a grid-shaped insert (17).

8. Device according to one or more of the preceding claims, **characterized in that** the outlet cross section AqIII and (AqIV) of the blower nozzle (13) is rectangular in shape, for example with walls (18, 19) which are approximately parallel, or is oval in shape.

9. Device according to one or more of the preceding claims, **characterized in that** the blower nozzle (13) is of moveable design and is provided with at least one handle (20).

10. Device according to one or more of the preceding claims, **characterized in that** the blower nozzle (13) is mounted in a pivoting fashion on a support (21) with a base (22).

11. Device according to one or more of the preceding claims, **characterized in that** an outer side (24) of the blower nozzle (13) is provided at least in certain areas with a sheath (25), for example made of resilient material, in the region of the outlet cross section.

12. Device according to Claim 11, **characterized in that** the sheath (25) projects, at least with small circumference, beyond the outlet cross section (Aq; AqI, AqII, AqIII and AqIV).

13. Device according to Claim 6, **characterized in that** the air flow of the blower (9) can be regulated by means of a control device (23).

## Revendications

1. Dispositif de tests des bruits d'air d'un véhicule automobile, en particulier d'un véhicule de tourisme (1), qui se produisent sous l'effet de l'afflux de l'air contre une peau extérieure (3) d'une carrosserie du véhicule de tourisme (1), comprenant une soufflante (9) au moyen de laquelle des flux d'air peuvent être dirigés dans des régions de la peau extérieure (3) contre le véhicule de tourisme immobile (1), **caractérisé en ce que** les bruits d'air se produisant sous l'effet des flux d'air peuvent être perçus de manière subjective par une personne effectuant le test (PiF) se trouvant à l'intérieur du véhicule de tourisme (1) et par une personne effectuant le test (PaF) se trouvant à l'extérieur du véhicule de tourisme (1), et/ou peuvent être déterminés par une mesure, la soufflante (9) étant réalisée de manière à être déplacée par la personne effectuant le test (PaF) se trouvant à l'extérieur du véhicule de tourisme (1) de telle sorte que la soufflante (9) puisse être orientée dans la région des portes (7) et du toit ouvrant (6) en vue de percevoir et/ou mesurer les bruits d'air au niveau de points de mesure définis (MPI, MPII et MPIII).

2. Dispositif selon la revendication 1, **caractérisé en ce que** la soufflante (9) comprenant une section transversale de sortie fait partie d'un dispositif d'écoulement (12) qui est pourvu d'une buse de soufflage (13) pour solliciter les points de mesure (MPI, MPII et MPIII).

3. Dispositif selon la revendication 2, **caractérisé en ce qu'**un silencieux (14) est monté en aval de la soufflante (9).

4. Dispositif selon la revendication 3, **caractérisé en ce qu'**entre la buse de soufflage (13) et le silencieux (14) est prévu un tuyau de transport (15).

5. Dispositif selon l'une quelconque ou plusieurs des revendications précédentes, **caractérisé en ce que** la soufflante (9), le silencieux (14), le tuyau de transport (15) et la buse de soufflage (13) sont réunis au moins en partie pour former une unité structurelle (16).

6. Dispositif selon l'une quelconque ou plusieurs des revendications précédentes, **caractérisé en ce que** la section transversale de sortie (AqI) de la buse de soufflage (13) présente une forme circulaire.

7. Dispositif selon la revendication 6, **caractérisé en ce que** la section transversale de sortie (AqII) est pourvue d'un insert en forme de grille (17).

8. Dispositif selon l'une quelconque ou plusieurs des revendications précédentes, **caractérisé en ce que** la section transversale de sortie (AqIII) et (AqIV) de la buse de soufflage (13) présente une forme rectangulaire par exemple avec des parois approximativement parallèles (18, 19) ou une forme ovale.

9. Dispositif selon l'une quelconque ou plusieurs des revendications précédentes, **caractérisé en ce que** la buse de soufflage (13) est réalisée de manière mobile et est pourvue d'au moins une poignée (20).

10. Dispositif selon l'une quelconque ou plusieurs des revendications précédentes, **caractérisé en ce que** la buse de soufflage (13) est supportée de manière pivotante sur un pied (21) avec un socle (22).

11. Dispositif selon l'une quelconque ou plusieurs des revendications précédentes, **caractérisé en ce qu'**un côté extérieur (24) de la buse de soufflage (13) dans la région de la section transversale de sortie est pourvu au moins en partie d'une enveloppe (25) par exemple en matériau flexible.

12. Dispositif selon la revendication 11, **caractérisé en ce que** l'enveloppe (25) fait saillie au moins dans une faible mesure au-delà de la section transversale de sortie (Aq ; AqI, AqII, AqIII et AqIV).

13. Dispositif selon la revendication 6, **caractérisé en ce que** le flux d'air de la soufflante (9) peut être réglé au moyen d'un dispositif de commande (23).
